# EUROPEAN PATENT APPLICATION

(11) **EP 4 797 068 A1**
(43) Date of publication of application: **26.08.2026**
(21) Application number: 24922679.6
(22) Date of filing: 05.12.2024
(51) Int. Cl.: G06F 3/14

(54) **DISPLAY METHOD BASED ON INPUT AND OUTPUT MATCHING, AND CIRCUIT, DEVICE AND STORAGE MEDIUM**

(71) Applicant: VeriSilicon Microelectronics (Shanghai) Co., Ltd., Shanghai 201203 (CN); VeriSilicon Microelectronics (Chengdu) Co., Ltd., Chengdu, Sichuan 610041 (CN)
(72) Inventor: ZHENG, Ping, Shanghai 201203 (CN); ZHOU, Chuanjie, Shanghai 201203 (CN); YANG, Yizhoug, Shanghai 201203 (CN); YE, Ting, Shanghai 201203 (CN); WANG, Chun, Shanghai 201203 (CN)
(74) Representative: Bryn Aarflot AS
(86) International application number: PCT/CN2024/137217
(87) International publication number: WO 2026/118029

(57) **Abstract**

The present invention provides an input-output matching-based display method, circuit, and device and a storage medium. The input-output matching-based display method includes: acquiring an input display timing standard stream and an output display timing standard stream; determining whether the input display timing standard stream and the output display timing standard stream are matched; and adjusting, if the input display timing standard stream and the output display timing standard stream are not matched, porch of the output display timing standard stream, so as to enable time of pixel output controlled by the output display timing standard stream to be matched with time of pixel input controlled by the input display timing standard stream, where the porch includes at least one of vertical back porch, vertical back porch, horizontal front porch, and horizontal back porch. This method can improve image output and display quality.

## Description

### TECHNICAL FIELD

The present invention relates to the field of display, and specifically provides an input-output matching-based display method, circuit, and device and a storage medium.

### BACKGROUND ART

When displaying images, a display panel controls input and output of pixels in each row and column according to a display timing standard stream, so as to display images.

The display timing standard stream includes input display timing standard stream and output display timing standard stream, respectively governing input and output of pixels. Configuration parameters of the output display timing standard stream are all fixed parameters, i.e., latch registers configured by software to hardware, and values of the configuration parameters of the output display timing standard stream are required to be rounded. For example, the output display timing standard stream includes VBP (Vertical Back Porch), VFP (Vertical Front Porch), HBP (Horizontal Back Porch) and HFP (Horizontal Front Porch), which typically require rounding to integers.

When performing image scaling, the output display timing standard stream also needs scaling, or when the input display timing standard stream changes, the output display timing standard stream needs to be adaptively adjusted accordingly. In both scaling and adaptive adjustment, parameter values of configuration parameters in the output display timing standard stream may result in non-integer values after division, and the configuration parameters of the output display timing standard stream will be rounded, in which case, it may result in misalignment between the parameters of the input display timing standard stream and those of the output display timing standard stream, thus potentially leading to mismatch between a pixel input rate controlled by the input display timing standard stream and a pixel output rate controlled by the output display timing standard stream, for example, issues of frame rate mismatch and row rate mismatch, thus affecting normal output and display of image data.

### SUMMARY

In view of this, the present invention aims at providing an input-output matching-based display method, circuit, and device and a storage medium, so as to improve quality of image output and display.

In the first aspect, embodiments of the present invention provide an input-output matching-based display method, including steps of: acquiring an input display timing standard stream and an output display timing standard stream; determining whether the input display timing standard stream and the output display timing standard stream are matched; and adjusting, if the input display timing standard stream and the output display timing standard stream are not matched, porch of the output display timing standard stream, so as to enable time of pixel output controlled by the output display timing standard stream to be matched with time of pixel input controlled by the input display timing standard stream.

After the image scaling, the input display timing standard stream and the output display timing standard stream may not be matched, so that pixel input and output speeds are inconsistent, that is, problems of inconsistent row rates and inconsistent frame rates occur. Porch includes an interval time required for further scanning after scanning a frame image or a row of pixels, and by adjusting a porch duration, the pixel input and output speeds can be adjusted. Therefore, in embodiments of the present invention, when the input display timing standard stream and the output display timing standard stream are not matched, the porch of the output display timing standard stream can be adjusted, thereby adjusting the time of pixel output controlled by the output display timing standard stream, so as to enable time of pixel output controlled by the output display timing standard stream to be matched with time of pixel input controlled by the input display timing standard stream, thus achieving adaptive control and adjustment of frame rates, and further achieving adjustment of output rate, enabling the output rate to be matched with the input rate (i.e., achieving row rate matching and frame rate matching), reducing influences on output image quality and display effect due to inconsistent frame rates and row rate mismatch, and improving image output and display quality.

In an embodiment, the output display timing standard stream is obtained by performing image scaling on the input display timing standard stream by a predefined image scaling factor; and the step of determining whether the input display timing standard stream and the output display timing standard stream are matched includes: determining a first total cycle quantity of the input display timing standard stream based on vertical parameters and horizontal parameters of the input display timing standard stream; determining a second total cycle quantity based on the image scaling factor, and vertical parameters and horizontal parameters of the output display timing standard stream; calculating, based on the first total cycle quantity and the second total cycle quantity, a cycle interval between the input display timing standard stream and the output display timing standard stream; and determining, based on the cycle interval and a predefined threshold, whether the input display timing standard stream and the output display timing standard stream are matched, where if the cycle interval exceeds the predefined threshold, it is determined that the input display timing standard stream and the output display timing standard stream are not matched; and if the cycle interval is within the predefined threshold, it is determined that the input display timing standard stream and the output display timing standard stream are matched.

During the image scaling, the input display timing standard stream also needs to be scaled, that is, the output display timing standard stream is obtained by scaling the input display timing standard stream image. When the input display timing standard stream and the output display timing standard stream are matched, a product (i.e. the second total cycle quantity) of the total cycle quantity of the output display timing standard stream multiplied by the image scaling factor is matched with the first total cycle quantity of the input display timing standard stream. Therefore, in embodiments of the present invention, the first total cycle quantity and the second total cycle quantity can be calculated, the cycle interval therebetween is calculated, and whether the difference of cycle interval between the two is within a predefined threshold range is determined, so as to determine whether the input display timing standard stream and the output display timing standard stream are matched. This method is simple to calculate, and helps improve the efficiency of determining whether the two are matched.

In an embodiment, the porch includes vertical back porch; pixels obtained from the image scaling are temporarily stored in a buffer before output, where the buffer is set with a watermark configured in advance, and when the number of rows of pixels temporarily stored in the buffer reaches the watermark, the buffer outputs the temporarily stored pixels, and ends the vertical back porch in the output display timing standard stream; the step of adjusting porch of the output display timing standard stream includes: acquiring the image scaling factor; and adjusting the watermark based on the image scaling factor, so as to adjust the vertical back porch.

The input pixels having undergone the image scaling are temporarily stored in the buffer, and are output when the pixels stored in the buffer reach a certain number of rows (i.e. watermark), and thus, the vertical back porch in the output display timing standard stream is ended. Therefore, the vertical back porch is equal to the temporary storage duration of the pixel rows in the buffer. In embodiments of the present invention, the temporary storage time of the pixels can be adjusted by adjusting the watermark of the buffer based on the image scaling factor, so as to adjust the vertical back porch, enable the pixel output rate to be matched with the pixel input rate, reduce the situations of frame rate mismatch, and improve the image output and display quality.

In an embodiment, the image scaling factor includes a vertical image scaling factor in a vertical direction; and the step of adjusting the watermark based on the image scaling factor includes: if the vertical image scaling factor is reduced by X times, adjusting the watermark to a first predefined value, where X is a positive integer; and if the vertical image scaling factor is enlarged by X times, adjusting the watermark to M, where when the X is smaller than or equal to a second predefined value, the M is equal to the X, and when the X is larger than the second predefined value, the M is equal to the second predefined value; and the first predefined value is smaller than the second predefined value.

When the vertical image scaling factor is 1/X, the output display timing standard stream is reduced X times, and if the watermark is unchanged, and the buffer stores enough pixels to output, it is time-consuming. Therefore, in embodiments of the present invention, the watermark can be adjusted to a smaller first predefined value, so that the vertical back porch is ended as soon as possible, so as to be matched with the input display timing standard stream. On the contrary, when the vertical image scaling factor is X, the watermark can be elevated to temporarily store more output pixels, thereby delaying the end of the vertical back porch. In the above, on the one hand, when the image scaling factor is less than the second predefined value, M=X, for enabling the watermark to be matched with the scale-up factor, so as to avoid a situation that the output display timing standard stream is not matched with the input display timing standard stream when the watermark is too high. On the other hand, when the image scaling factor exceeds the second predefined value (X is larger than the second predefined value), M is enabled to be equal to the second predefined value, so as to reduce the situation of degraded image output instantaneity caused by too high watermark and too long temporary storage duration of the output display timing standard stream.

In an embodiment, the porch includes horizontal front porch and horizontal back porch; and the step of adjusting porch of the output display timing standard stream includes: acquiring a target data volume, where the target data volume is a data volume of pixels stored in the buffer as controlled by the input display timing standard stream; and the pixels are temporarily stored in the buffer before output; calculating a target difference value between the target data volume and a predefined data volume, where the predefined data volume characterizes a data volume of pixels output by the buffer as controlled by the output display timing standard stream; and adjusting at least one of the horizontal front porch and the horizontal back porch based on the target difference value, so as to enable a duration required by the output display timing standard stream for outputting the target data volume by the buffer to be matched with a duration required by the output display timing standard stream for outputting the predefined data volume.

When the input display timing standard stream and the output display timing standard stream are not matched, there is an interval between the total cycles of the input display timing standard stream and the output display timing standard stream, and in the interval, the buffer still stores or outputs data; and if the pixel output rate controlled by the output display timing standard stream is unchanged, the data (pixels required to be output) temporarily stored in the buffer will gradually accumulate or decrease. Therefore, it is desirable to accelerate or decelerate a data output rate, so that the pixel input rate controlled by the input display timing standard stream and the pixel output rate controlled by the output display timing standard stream can be matched. In embodiments of the present invention, at least one of the horizontal front porch and the horizontal back porch may be adjusted. The horizontal front porch and the horizontal back porch can respectively control the waiting period before and after the output of a single row of pixels. Therefore, by adjusting the horizontal front porch and the horizontal back porch, the waiting period required for outputting each row of pixels can be reduced, and thus a frequency of outputting the pixels is adjusted. Therefore, by adjusting the horizontal front porch and the horizontal back porch, the time of pixel output controlled by the output display timing standard stream can be matched with the time of pixel input controlled by the input display timing standard stream, and the image output and display quality are improved.

In an embodiment, the step of adjusting at least one of the horizontal front porch and the horizontal back porch based on the target difference value includes: if the target difference value characterizes that the target data volume is larger than the predefined data volume, decreasing at least one of the horizontal front porch and the horizontal back porch proportionally according to a ratio of the target difference value to the predefined data volume; and if the target difference value characterizes that the target data volume is smaller than the predefined data volume, increasing at least one of the horizontal front porch and the horizontal back porch proportionally according to the ratio of the target difference value to the predefined data volume.

In the present embodiment, if the target difference value characterizes that the target data volume is larger than the predefined data volume, it is indicated that the pixel input rate controlled by the input display timing standard stream is greater than the pixel output rate controlled by the output display timing standard stream. Therefore, at least one of the horizontal front porch and the horizontal back porch can be proportionally reduced, so as to increase the pixel outputting rate. Conversely, if the difference values characterizes that the target data volume is smaller than the predefined data volume, it is indicated that the pixel input rate controlled by the input display timing standard stream is smaller than the pixel output rate controlled by the output display timing standard stream, at least one of the horizontal front porch and the horizontal back porch can be proportionally increased, so as to decelerate the pixel outputting rate. Thus, the time of pixel output controlled by the output display timing standard stream can be matched with the time of pixel input controlled by the input display timing standard stream, and the image output and display quality are improved.

In an embodiment, the porch includes vertical front porch, and the step of adjusting porch of the output display timing standard stream includes: adjusting the vertical front porch to end upon expiration of a predefined duration after the input display timing standard stream is ended, where the predefined duration after the input display timing standard stream is ended characterizes predefined time when the output display timing standard stream is ended.

Once the vertical front porch in the output display timing standard stream is ended, output of pixels of next frame image will proceed. When the input display timing standard stream and the output display timing standard stream are matched, the output display timing standard stream should be ended after a delay of a predefined duration after the input display timing standard stream is ended, so as to proceed to output the pixels of the next frame image. Therefore, in embodiments of the present invention, the vertical front porch of the output display timing standard stream can be adjusted to end upon expiration of the predefined duration after the input display timing standard stream is ended, so as to enable the time of pixel output controlled by the output display timing standard stream to be matched with the time of pixel input controlled by the input display timing standard stream.

In an embodiment, the step of adjusting the vertical front porch to end upon expiration of a predefined duration after the input display timing standard stream is ended includes: upon expiration of the predefined duration after the input display timing standard stream is ended, if the output display timing standard stream does not end the vertical front porch, immediately ending the vertical front porch, or after completion of output of the output display timing standard stream of current row, ending the vertical front porch; and if the vertical front porch of the output display timing standard stream is ended after the input display timing standard stream is ended, and before the expiration of the predefined duration after the input display timing standard stream is ended, extending the vertical front porch to end upon expiration of the predefined duration after the input display timing standard stream is ended.

In embodiments of the present invention, by controlling the time when the vertical front porch is ended, the output display timing standard stream is enabled to be ended upon expiration of the predefined duration after the input display timing standard stream is ended, so as to enable the time of pixel output controlled by the output display timing standard stream to be matched with the time of pixel input controlled by the input display timing standard stream.

In an embodiment, after the step of adjusting porch of the output display timing standard stream, the method further includes: acquiring the cycle interval; calculating, based on the adjusted porch, a total duration of the output display timing standard stream in a predefined non-fixed direction, where the non-fixed direction is a horizontal direction or a vertical direction; evenly dividing the cycle interval based on the total duration in the non-fixed direction, so as to obtain an evenly divided result; and adjusting, based on the evenly divided result, porch of the output display timing standard stream of each subsequent frame in a fixed direction, where the fixed direction is the other one of the horizontal direction and the vertical direction except the non-fixed direction.

In embodiments of the present invention, the porch in the non-fixed direction may still change after adjustment. Therefore, the porch of the output display timing standard stream of each subsequent frame in the fixed direction can be adjusted, so that pixels can be stably output according to the adjusted porch in a subsequent display process, without the need to frequently adjust the porch of the output display timing standard stream.

In an embodiment, the porch in the fixed direction includes front porch and back porch, and the step of adjusting, based on the evenly divided result, porch of the output display timing standard stream of each subsequent frame in a fixed direction includes: allocating the evenly divided result to the front porch according to a first weight and allocating the evenly divided result to the back porch according to a second weight, where the first weight is a ratio of the front porch to the porch in the fixed direction; and the second weight is a ratio of the back porch to the porch in the fixed direction.

In embodiments of the present invention, by allocating the evenly divided result to the front porch and back porch according to the first weight and the second weight, the allocation of the porch can be more uniform, thereby rendering stronger anti-interference capability, and reducing influence of too long duration of single porch on image output and display quality.

In the second aspect, embodiments of the present invention provide an input-output matching-based display control circuit, including: an input-output circuit; and a matching circuit, connected to the input-output circuit, where the matching circuit is configured to implement the input-output matching-based display method according to any one of the first aspect based on the input display timing standard stream and the output display timing standard stream provided by the input-output circuit.

In the third aspect, embodiments of the present invention provide a display device, including: a display panel; and a display control unit, including the input-output matching-based display control circuit according to the second aspect, where the display control unit is configured to control display of an image on the display panel based on the input display timing standard stream and the output display timing standard stream provided by the input-output matching-based display control circuit.

In the fourth aspect, embodiments of the present invention provide a readable storage medium, where the readable storage medium stores a program, and when the computer program runs on a processor, the processor is enabled to execute the input-output matching-based display method according to any one of the first aspect.

### BRIEF DESCRIPTION OF DRAWINGS

In order to more clearly illustrate technical solutions of embodiments of the present invention, drawings that need to be used in the embodiments of the present invention will be briefly introduced below. It should be understood that the drawings only show some embodiments of the present invention, and thus should not be regarded as limitation to the scope. Those ordinary skilled in the art could also obtain other relevant drawings based on these drawings without using any inventive efforts.
FIG. 1 is a flowchart of an input-output matching-based display method provided by an embodiment of the present invention;
FIG. 2 is a schematic diagram of relationship between image scaling and a display timing standard stream provided by an embodiment of the present invention;
FIG. 3 is a schematic diagram of the display timing standard stream provided by an embodiment of the present invention;
FIG. 4 is a schematic diagram of vertical back porch adjustment provided by an embodiment of the present invention;
FIG. 5 is a schematic diagram of porch adjustment in a horizontal direction provided by an embodiment of the present invention;
FIG. 6 is a schematic diagram of vertical front porch provided by an embodiment of the present invention;
FIG. 7 is a schematic diagram of intra-frame adjustment and inter-frame adjustment provided by an embodiment of the present invention; and
FIG. 8 is a schematic diagram of an input-output matching-based display control circuit provided by an embodiment of the present invention.

Reference signs: input-output circuit 810; input-display-timing-standard-stream buffer 811; scaling circuit 812; output-display-timing-standard-stream buffer 813; display timing-standard-stream output circuit 814; and display control circuit 820.

### DETAILED DESCRIPTION OF EMBODIMENTS

In order to make objectives, technical solutions and advantages of embodiments of the present invention clearer and more understandable, the present invention will be further described in detail below in conjunction with drawings and embodiments. It should be understood that the embodiments described herein are merely used for explaining the present invention, rather than limiting the present invention.

Firstly, the present invention provides an input-output matching-based display method, which can be implemented by a program of a processor, or by a circuit including one or more devices.

If the input-output matching-based display method is implemented by a program of a processor, the processor may be a data processing core of a GPU (Graphics Processing Unit), a CPU (Central Processing Unit), an AI (Artificial Intelligence), an NPU (Neural network Processing Unit), an ISP (Image Signal Processor), a DPU (Display Processing Unit), a VPU (Video Processing Unit), a DSP (Digital Signal Processor), etc., or a processor chip applied to some scenarios such as mass data operations. The above-mentioned are merely exemplary and should not be construed as limitation to the present invention.

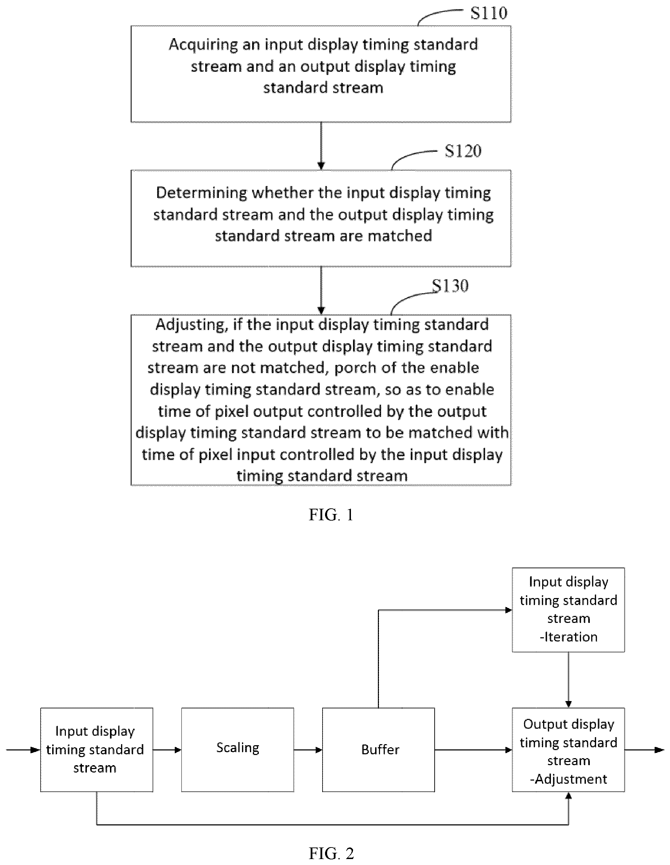

With reference to FIG. 1, FIG. 1 is a flowchart of an input-output matching-based display method provided by an embodiment of the present invention. The input-output matching-based display method includes:
S110, acquiring an input display timing standard stream and an output display timing standard stream.

Display timing standard stream is a clock signal, including multiple cycles, with each cycle configured to control input and output of pixels. The display timing standard stream includes the input display timing standard stream configured to control pixel input, and the output display timing standard stream configured to control pixel output.

With reference to FIG. 2, FIG. 2 is a schematic diagram of relationship between image scaling and the display timing standard stream provided by an embodiment of the present invention.

Regarding cases where the image scaling is required:
Firstly, an image is input based on the input display timing standard stream. During the image scaling, the image undergoes scaling according to an image scaling factor, and subsequently, pixels of the scaled image are temporarily stored in a buffer (or called as image line buffer). Moreover, as pixels in an output image are changed proportionally, the output display timing standard stream also needs to be proportionally adjusted, for example, if the pixel quantity in the output image is reduced, the output display timing standard stream also needs to reduce the clock cycles so as to reduce and control the quantity of output pixels. In the above, an adjustment ratio is the image scaling factor. For example, if the image is scaled up X times, the input display timing standard stream also needs to be scaled up X times so as to derive the output display timing standard stream; and if the image is scaled down X times, the input display timing standard stream is also scaled down X times so as to derive the output display timing standard stream. In this way, iterative adjustment of the output display timing standard stream is achieved. Finally, the pixel output is controlled based on the adjusted output display timing standard stream.

Regarding cases where the image scaling is not performed:
The input display timing standard stream may be directly output as the output display timing standard stream, in which case, the input display timing standard stream equals the output display timing standard stream. The pixels in the image are input based on the input timing standard stream and output based on the output timing standard stream.

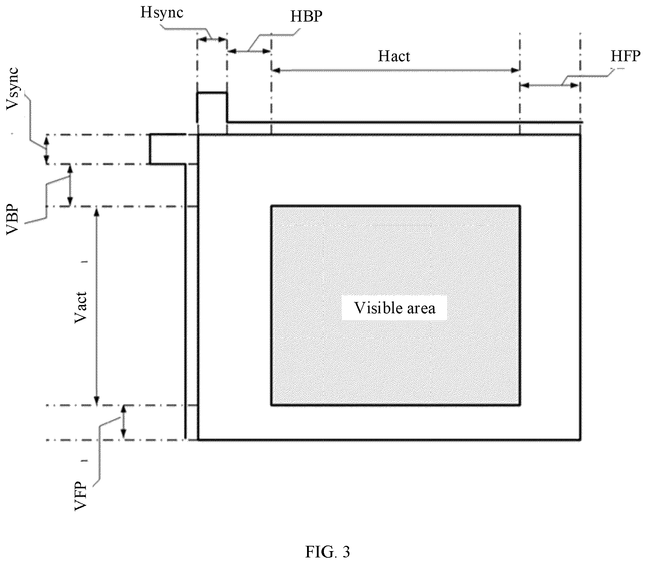

With reference to FIG. 3, FIG. 3 is a schematic diagram of the display timing standard stream provided by an embodiment of the present invention.

An image is output in pixel units, where pixels are output first to form pixel rows, and then multiple pixel rows are combined to form the image. Both the input display timing standard stream and the output display timing standard stream include vertical parameters (or called as field signals, field parameters) and horizontal parameters, where the horizontal parameters are configured to control input/output of pixel rows and row wrapping, and the vertical parameters are configured to control input/output of a frame image and switching between different frame images. As shown in FIG. 3, Visible area represents an image including output pixels/pixel rows.

The input or output of pixel rows is controlled by the horizontal parameters. The horizontal parameters include Hsync (Horizontal Sync Region), HBP, Hact (Horizontal Active Region) and HFP. A total number of the horizontal parameters of the input display timing standard stream or output display timing standard stream is Htotal, where Htotal=Hsync+HBP+Hact+HFP.

Similarly, the input or output of image frames is controlled by the vertical parameters. The vertical parameters include VBP, VFP, Vact (Vertical Active Region) and Vsync (Vertical Sync Region). A total number of the vertical parameters of the input display timing standard stream or output display timing standard stream is Vtotal, where Vtotal=Vsync+VBP+Vact+VFP. In the above parameters, VBP, VFP, HFP, and HBP can be collectively called as porch. The preceding contents about the display timing standard stream can be referred to the prior art, and will not be expanded herein.

S120, determining whether the input display timing standard stream and the output display timing standard stream are matched.

The output display timing standard stream actually acquired is obtained by scaling and rounding the input display timing standard stream. Therefore, in embodiments of the present invention, by "match", it does not mean that the input display timing standard stream is completely equal to the output display timing standard stream, instead, it means that the actually acquired output display timing standard stream, upon adjustment according to the image scaling factor, is identical to the input display timing standard stream or deviates from the input display timing standard stream within a predefined range; alternatively, various parameter values (unrounded) of the input display timing standard stream after scaling are the same as those (rounded) of the actually acquired output display timing standard stream or deviate within a predefined range.

During the image scaling, the output display timing standard stream will also be scaled proportionally. When the input display timing standard stream is set with an integer, a decimal may appear after proportional scaling of the output display timing standard stream, in which case downward or upward rounding will be performed. Exemplarily:

The input display timing standard stream includes: Hsync_i=10 cycle; HBP_i=19 cycle; Hact_i=512 cycle; HFP_i=39 cycle; Vsync_i=6; VBP_i=35; Vact_i=128; VFP_i=21, then the total cycle of the input display timing standard stream is Htotal_i*Vtotal_i=580*190=110200 cycle, where i is abbreviation for input, all the preceding parameters are parameters of the input display timing standard stream, and cycle represents cycle.

Given that a horizontal image scaling factor in a horizontal direction is 4 times scale-down (i.e., 1/4 of the original horizontal parameters) and a vertical image scaling factor in a vertical direction is 2 times scale-down (i.e., 1/2 of the vertical parameters), the output display timing standard stream after the scaling includes: Hsync_o=2 cycle; HBP_o=4 cycle; Hact_o=128 cycle; HFP_o=9 cycle; Vsync_o=3; VBP_o=17; Vact_o=64; VFP_o=10, then Htotal_o*Vtotal_o=143*94=13442 cycle is output, where o is abbreviation for output, and all the preceding parameters are various parameters of the output display timing standard stream.

As described in the preceding, the horizontal parameters and vertical parameters of the output display timing standard stream are all scaled down based on the horizontal parameters and vertical parameters of the input display timing standard stream and respective image scaling factors, for example, based on Hsync_i=10 cycle of the input display timing standard stream, a value of the output display timing standard stream after being proportionally scaled down 4 times should be 2.5, which is rounded downwards to Hsync_o=2 cycle. The same is applied to remaining parameters.

If the image scaling is performed without rounding, the total cycle of the output display timing standard stream is calculated as: 110200 cycle/(2×4)=13775 cycle, while the total cycle of the output display timing standard stream actually obtained after the rounding is 13442 cycles, with an interval of 333 cycles therebetween, and the interval will cause inconsistency between a rate of inputting pixels and a rate of outputting pixels, that is, the input display timing standard stream and the output display timing standard stream are not matched.

Therefore, in an embodiment of the present invention, the step of determining whether the input display timing standard stream and the output display timing standard stream are matched may include: determining a first total cycle quantity of the input display timing standard stream based on the vertical parameters and the horizontal parameters of the input display timing standard stream; determining a second total cycle quantity based on the image scaling factor, and the vertical parameters and horizontal parameters of the output display timing standard stream; calculating, based on the first total cycle quantity and the second total cycle quantity, a cycle interval between the input display timing standard stream and the output display timing standard stream; and determining, based on the cycle interval and a predefined threshold, whether the input display timing standard stream and the output display timing standard stream are matched.

In this embodiment, if the cycle interval exceeds the predefined threshold, it can be determined that the input display timing standard stream and the output display timing standard stream are not matched; and if the cycle interval does not exceed the predefined threshold, it can be determined that the input display timing standard stream and the output display timing standard stream are matched.

As mentioned in the preceding, the first total cycle quantity=Htotal_i*Vtotal_i=(Hsync_i+HBP_i+Hact_i+HFP_i)* (Vsync_i+VBP_i+Vact_i+VFP_i); the second total cycle quantity=Htotal_o *Vtotal_o=(Hsync_o+HBP_o+Hact_o+HFP_o)* (Vsync_o+VBP_o+Vact_o+VFP_o), where various parameters in the output display timing standard stream are obtained by rounding various parameters in the input display timing standard stream scaled by corresponding image scaling factors.

In the above, when the first total cycle quantity and the second total cycle quantity are not equal, it indicates mismatch between the rates of pixel input and output controlled by the input display timing standard stream and output display timing standard stream. Therefore, the first total cycle quantity and the second total cycle quantity can be directly compared, and if the two are different, it can be determined that the input display timing standard stream and the output display timing standard stream are not matched.

In some other embodiments, a difference value between the first total cycle quantity and the second total cycle quantity can also be calculated, so as to derive the cycle interval between the input display timing standard stream and the output display timing standard stream. The cycle interval is compared with the predefined threshold, and if the cycle interval exceeds the predefined threshold, it can be determined that the input display timing standard stream and the output display timing standard stream are not matched. For example, in the preceding embodiments, the cycle interval is 333 cycles, and if it exceeds the predefined threshold, it can be determined that the input display timing standard stream and the output display timing standard stream are not matched. In the above, the predefined threshold may be 0. If there is a small interval, there is minor influence on actual output of image. Therefore, the predefined threshold can also be a small value, for example, 3, 5, and 10, which is not limited herein.

S130, adjusting, if the input display timing standard stream and the output display timing standard stream are not matched, porch of the output display timing standard stream, so as to enable time of pixel output controlled by the output display timing standard stream to be matched with time of pixel input controlled by the input display timing standard stream.

As described in the preceding, if the input display timing standard stream and the output display timing standard stream are not matched, the controlled rates of pixel input and output may not be matched; if controlled rates of pixel row input and output are not matched, an issue of row rate mismatch may occur; if the controlled image frame input and output rates are not matched, a situation of frame rate mismatch may occur. Both row rate mismatch and frame rate mismatch degrade quality of image output and display. Therefore, if the input display timing standard stream and the output display timing standard stream are not matched, the input and output rates of pixels need to be adjusted to match.

As the output display timing standard stream is obtained by scaling the input display timing standard stream, if the input display timing standard stream changes, the output display timing standard stream will also change; therefore, the output display timing standard stream can be adjusted.

In the above, the output display timing standard stream includes Hsync, Hact, Vsync, and Vact that enable the pixel output, and if it is adjusted, abnormality may occur to the output of pixels. While regarding porch of the output display timing standard stream, no pixel is output during in a porch interval. Porch refers to a period of waiting period after pixel output. For example, pixels are output row-by-row from left to right into pixel rows, the horizontal porch (horizontal front porch and horizontal back porch) includes a waiting period for returning from the end of a current row of pixels to the beginning of a next row, the vertical porch (vertical front porch and vertical back porch) includes a period for an electron gun to return from a bottom-right corner to a top-left corner of a frame image, and the porch period reserved for the electron gun operation typically contains a surplus, therefore, the rate of outputting a row of pixels or a frame image can be adjusted by adjusting the porch of the output display timing standard stream, so as to enable the time of pixel output controlled by the output display timing standard stream to be matched with the time of pixel input controlled by the input display timing standard stream, and enable the timing of outputting one frame image controlled by the output display timing standard stream to be matched with the timing of inputting one frame image controlled by the input display timing standard stream.

As shown in FIG. 2, after the image scaling, the pixels are stored in a buffer rather than immediately output. When the pixel quantity reaches a certain number of rows, the pixels stored in the buffer are output, and during this waiting period, the output display timing standard stream concurrently executes the vertical back porch, which is ended once the pixels are output from the buffer. Therefore, adjusting the period of the pixels stored in the buffer is equivalent to adjusting the vertical back porch.

The buffer stores pixels in row units, for example, stores 1 row, 2 rows, or more rows, with an upper bound of pixel rows stored in the buffer as watermark. The watermark is configured in advance, and once the number of rows of pixels temporarily stored in the buffer reaches the watermark, the buffer outputs the temporarily stored pixel rows and ends the vertical back porch in the output display timing standard stream. That is, the watermark affects the number of the pixel rows stored, thereby affecting the temporary storage period of the pixels, and further affecting the vertical back porch. Therefore, by adjusting the watermark, the vertical back porch can be adjusted.

In an embodiment of the present invention, the step of adjusting porch of the output display timing standard stream may include: acquiring the image scaling factor; and adjusting the watermark based on the image scaling factor, so as to adjust the vertical back porch.

As described in the preceding, the output display timing standard stream is obtained by scaling the input display timing standard stream according to the image scaling factor; therefore, in embodiments of the present invention, the watermark can also be adjusted according to the image scaling factor, so as to enable the period of the pixels stored in the buffer to also increase or decrease proportionally, which method is equivalent to adjusting the vertical back porch.

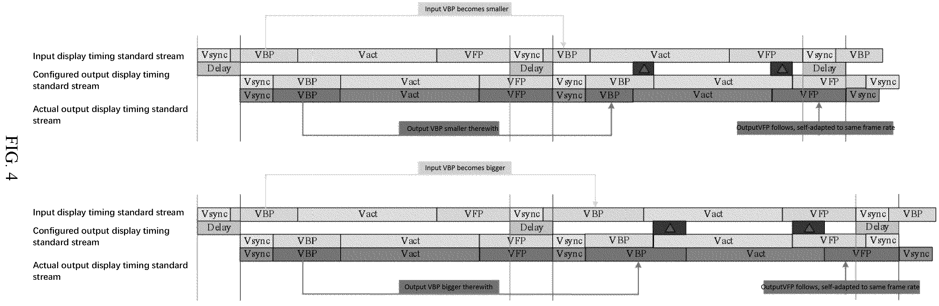

With reference to FIG. 4, FIG. 4 is a schematic diagram of vertical back porch adjustment provided by an embodiment of the present invention. As shown in FIG. 4, the configured output display timing standard stream is the output display timing standard stream without porch adjustment, and the actual output display timing standard stream is the output display timing standard stream after porch adjustment (similarly hereinafter). In the vertical direction, a full input display timing standard stream and output display timing standard stream include Vsync, VBP, Vact and VFP. After a certain delay Delay upon execution of the input display timing standard stream, the output display timing standard stream also starts to execute. For ease of understanding, when the input display timing standard stream and the output display timing standard stream are matched, all phases are consistent in length (in practical scenarios, durations of the input display timing standard stream and the output display timing standard stream exhibit a proportional relationship), such as the actual output display timing standard stream shown in FIG. 4, while in embodiments of the present invention, after the vertical back porch by adjusting the watermark, the length of VBP is increased or decreased, with an increased or decreased length as shown by a triangular region, and by adjusting the vertical back porch, the timing for outputting a row of pixels based on the output display timing standard stream can be increased or decreased, thereby reducing the difference between the time of pixel output controlled by the output display timing standard stream and the time of pixel input controlled by the input display timing standard stream, so as to achieve matching therebetween.

In an embodiment of the present invention, the step of adjusting the watermark based on the image scaling factor may include: adjusting, if the vertical image scaling factor is reduced by X times, the watermark to a first predefined value; and adjusting, if the vertical image scaling factor is enlarged by X times, the watermark to M, where when X is smaller than or equal to a second predefined value, M is equal to X, and when X is larger than the second predefined value, M is equal to the second predefined value.

The first predefined value, the second predefined value, X and M are all positive integers, and the first predefined value is smaller than the second predefined value. For example, the first predefined value is any one of 2, 3 and 4, and the second predefined value is 8. In this embodiment, when the vertical image scaling factor indicates scale-down, the watermark is adjusted to store 2 to 4 rows of pixels; and when the vertical image scaling factor indicates scale-up and a scale-up factor is X, the watermark is adjusted to store X rows of pixels, with at most no more than 8 rows of pixels, that is, M=X and M is smaller than or equal to 8.

In this embodiment, if the image is scaled down, the output display timing standard stream should also be shortened; therefore, the vertical back porch is adjusted to a smaller first predefined value, so as to end the vertical back porch as soon as possible, for matching with the input display timing standard stream. Conversely, when the vertical image scaling factor is X, the watermark can be elevated so as to temporarily store more output pixels, thereby delaying the end of the vertical back porch. When the image scaling factor is below the second predefined value, M=X, for matching the watermark with the scale-up factor, so as to avoid mismatch between the output display timing standard stream and the input display timing standard stream due to a too high watermark. If the image scaling factor exceeds the second predefined value (X is larger than the second predefined value), M is enabled to be equal to the second predefined value, so as to reduce the situation of degraded image output instantaneity caused by too high watermark and too long temporary storage duration of the output display timing standard stream.

In addition, if the vertical back porch of the input display timing standard stream changes, by adjusting the vertical back porch of the output display timing standard stream, the output display timing standard stream can also be changed with the input display timing standard stream, thereby achieving adaptive adjustment of frame rate.

In an embodiment, the step of adjusting porch of the output display timing standard stream further may include: acquiring a target data volume; calculating a target difference value between the target data volume and a predefined data volume; and adjusting at least one of the horizontal front porch and the horizontal back porch based on the target difference value, so as to enable a duration required by the output display timing standard stream for outputting the target data volume by the buffer to be matched with a duration required by the output display timing standard stream for outputting the predefined data volume.

In the present embodiment, the target data volume is a data volume of pixels stored in the buffer as controlled by the input display timing standard stream, and the predefined data volume characterizes a data volume of pixels output by the buffer as controlled by the output display timing standard stream. As shown in FIG. 2, during Hact, pixels are continuously written into the buffer and output, and the pixel quantity controlled and output in the Hact is the predefined data volume; and during the Hact, the data volume actually stored in the buffer can be recorded to obtain the target data volume.

When the input display timing standard stream and the output display timing standard stream are matched, the pixel quantity temporarily stored in the buffer maintains a dynamic equilibrium. If the target data volume is greater than the predefined data volume, the pixels temporarily stored in the buffer are gradually increased; conversely, if the target data volume is smaller than the predefined data volume, the pixels temporarily stored in the buffer will be gradually decreased. Both increase and decrease of the pixels in the buffer will affect the output and display of the image, and degrade the display effect.

Therefore, in embodiments of the present invention, the output of pixels in the buffer can be accelerated or decelerated based on the difference between the target data volume and the predefined data volume, so as to enable the output of pixels in the buffer to be balanced with the input, and enable the duration required by the output display timing standard stream for outputting the target data volume by the buffer to be matched with the duration required by the output display timing standard stream for outputting the predefined data volume.

As shown in FIG. 2, the horizontal front porch and the horizontal back porch are configured to adjust the waiting period for outputting the next row of pixels after completion of output of the current row of pixels. Therefore, by adjusting the horizontal front porch and the horizontal back porch, the output of pixels can be accelerated or decelerated.

In the above, the target difference value between the target data volume and the predefined data volume can be used to characterize that the buffer is in a state of outputting pixels faster or a state of storing pixels faster. Therefore, at least one of the horizontal front porch and the horizontal back porch can be adjusted according to the target difference value.

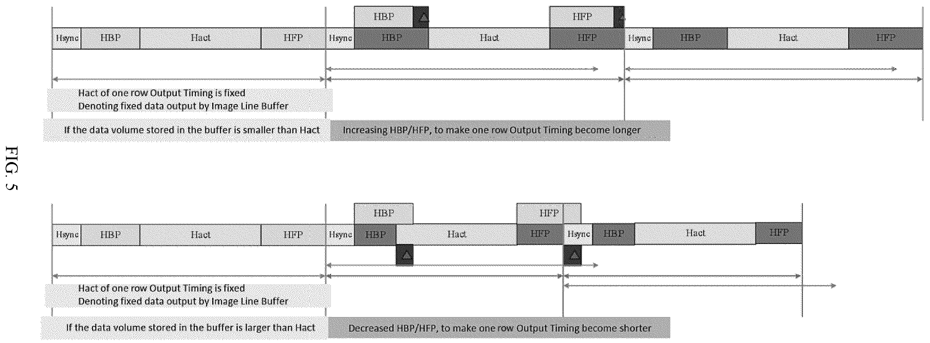

As shown in FIG. 5, FIG. 5 is a schematic diagram of porch adjustment in a horizontal direction provided by an embodiment of the present invention, in which triangular regions characterize differences in porch before and after adjusting. In FIG. 5, the total data volume output based on the output display timing standard stream is constant, that is, the total data volume of pixels (predefined data volume) output by the buffer during the Hact is unchanged. If the data volume (target data volume) stored in the buffer based on the input display timing standard stream is smaller than the data volume (predefined data volume) output based on the output display timing standard stream, then at least one of the HBP and HFP can be increased, so as to prolong the waiting period of the output display timing standard stream, during which time, the buffer can store more pixels based on the input display timing standard stream, so as to achieve a balance between input and output. Conversely, if the data volume (target data volume) stored in the buffer based on the input display timing standard stream is larger than the data volume (predefined data volume) output based on the output display timing standard stream, at least one of the HBP and HFP can be decreased, so as to shorten the waiting period of the output display timing standard stream, accelerate frequency of data output, and achieve the balance between input and output.

In embodiments of the present invention, the step of adjusting at least one of the horizontal front porch and the horizontal back porch based on the target difference value may include: decreasing, if the target difference value characterizes that the target data volume is larger than the predefined data volume, at least one of the horizontal front porch and the horizontal back porch proportionally according to a ratio of the target difference value to the predefined data volume; and increasing, if the target difference value characterizes that the target data volume is smaller than the predefined data volume, at least one of the horizontal front porch and the horizontal back porch proportionally according to the ratio of the target difference value to the predefined data volume.

In the present embodiment, the ratio increased or decreased is the ratio of the target difference value to the predefined data volume. In the above embodiment, if the horizontal front porch and the horizontal back porch are both adjusted, a sum of adjustment amounts of the horizontal front porch and the horizontal back porch is equal to the target difference value.

In this embodiment, proportionally adjusting the horizontal front porch and the horizontal back porch can effectively reduce the situation of continuous increase or decrease in the data volume of the pixels stored in the buffer caused by excessive adjustment amplitude to the horizontal front porch and horizontal back porch.

In an embodiment, the step of adjusting porch of the output display timing standard stream further may include: adjusting the vertical front porch to end upon expiration of a predefined duration after the input display timing standard stream is ended.

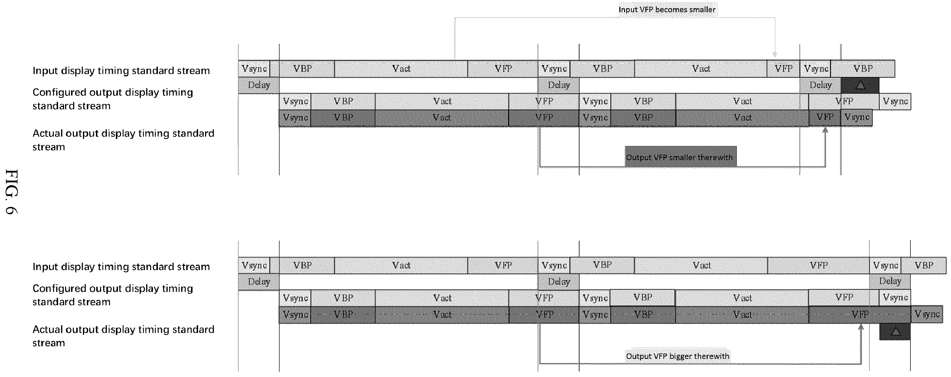

With reference to FIG. 6, FIG. 6 is a schematic diagram of adjustment of vertical front porch provided by an embodiment of the present invention. In the present embodiment, the predefined delay is a delay between the input display timing standard stream and the output display timing standard stream, such as delay in FIG. 4 and FIG. 6, when the input display timing standard stream and the output display timing standard stream are matched, after the input display timing standard stream is ended, the output display timing standard stream should also be ended after the delay of the predefined duration.

The vertical front porch is a last phase of corresponding output display timing standard stream of one frame image, and after the vertical front porch is ended, it proceeds to the output display timing standard stream for outputting the next frame image. Therefore, if the input display timing standard stream and the output display timing standard stream are not matched, the vertical front porch can be adjusted, so as to achieve matching therebetween.

In embodiments of the present invention, adjusting the vertical front porch may be executed by adjusting the vertical front porch to end upon expiration of a predefined duration after the input display timing standard stream is ended, that is, the vertical front porch is adjusted such that upon expiration of the predefined duration after the input display timing standard stream is ended, the vertical front porch is also ended.

In an embodiment, the step of adjusting the vertical front porch to end upon expiration of a predefined duration after the input display timing standard stream is ended may include: upon expiration of the predefined duration after the input display timing standard stream is ended, if the output display timing standard stream does not end the vertical front porch, immediately ending the vertical front porch, or after completion of output of the output display timing standard stream of current row, ending the vertical front porch; if the vertical front porch of the output display timing standard stream is ended after the input display timing standard stream is ended, and before the expiration of the predefined duration after the input display timing standard stream is ended, extending the vertical front porch to end upon expiration of the predefined duration after the input display timing standard stream is ended.

As shown in FIG. 6, in the output display timing standard stream corresponding to a second frame image, regardless of decrease or increase of the VFP, the end time of the VFP in the output display timing standard stream is the same as the end time of the input display timing standard stream plus the predefined duration (Delay).

Thus, by adjusting the vertical front porch, the output display timing standard stream can be synchronized to end with the input display timing standard stream after the predefined delay, and the two proceed to control pixels of the next frame image, so that a total duration of the input display timing standard stream and the output display timing standard stream is consistent.

In the above embodiment, the vertical front porch, the vertical back porch, the horizontal front porch and the horizontal back porch can be adjusted alternatively, or multiple can be adjusted concurrently, which is not limited herein.

The above-mentioned vertical front porch, vertical back porch, horizontal front porch and horizontal back porch are intra-frame adjustment, that is, one frame image is adjusted. As image output consists of consecutive multiple frames, in order for subsequent output to maintain matching between the time of pixel output controlled by the output display timing standard stream and the time of pixel input controlled by the input display timing standard stream, inter-frame adjustment (frame-by-frame adjustment) is further required for respective frame images.

In an embodiment of the present invention, the inter-frame adjustment can make the porch in the output display timing standard stream corresponding to each subsequent frame image consistent with the porch in the current output display timing standard stream.

In another embodiment of the present invention, after adjusting the porch of the output display timing standard stream, the method may further include: acquiring the cycle interval; calculating, based on the adjusted porch, a total duration of the output display timing standard stream in a predefined non-fixed direction; evenly dividing the cycle interval based on the total duration in the non-fixed direction, so as to obtain an evenly divided result; and adjusting, based on the evenly divided result, porch of the output display timing standard stream of each subsequent frame in a fixed direction.

In the above, the cycle interval is derived based on the preceding first total cycle quantity and second total cycle quantity, that is, $cycle interval = \left|\frac{first total cycle quantity}{image scaling factor}-second total cycle quantity\right|$ . The fixed direction and the non-fixed direction are predefined directions. If the fixed direction is a horizontal direction, then the non-fixed direction is a vertical direction; conversely, if the fixed direction is a vertical direction, then the non-fixed direction is a horizontal direction.

In this embodiment, a variation frequency of porch in the fixed direction is low; therefore, a variation amount of porch in the non-fixed direction can be allocated to the fixed direction, so as to reduce an adjustment frequency of porch, thus subsequently enabling stable output of image with the adjusted porch.

Therefore, the total duration of the output display timing standard stream in the predefined non-fixed direction can be calculated based on the adjusted porch. For example, if the horizontal direction is the non-fixed direction, the output display timing standard stream in the horizontal direction obtained based on the adjusted porch can be expressed as H=Hsync_o+HBP_r+Hact_o+HFP_r, where r represents the adjusted porch, and H represents the output display timing standard stream in the horizontal direction obtained from the adjusted porch.

Evenly dividing the cycle interval based on the total duration in the non-fixed direction can be expressed as: E=gap/H, where gap represents the cycle interval, and then a total value that needs to be adjusted for porch of the output display timing standard stream of each subsequent frame in the vertical direction is E, where E can be allocated to the vertical front porch and the vertical front porch respectively.

The porch in the fixed direction includes front porch and back porch. If the fixed direction is the vertical direction, then the porch in the fixed direction includes vertical front porch and vertical back porch; and if the fixed direction is the horizontal direction, then the porch in the fixed direction is horizontal front porch and horizontal back porch.

In an embodiment of the present invention, the step of adjusting, based on the evenly divided result, porch of the output display timing standard stream of each subsequent frame in a fixed direction may include: allocating the evenly divided result to the front porch according to a first weight and allocating the evenly divided result to the back porch according to a second weight.

In the present embodiment, the first weight is a ratio of the front porch to the porch in the fixed direction; and the second weight is a ratio of the back porch to the porch in the fixed direction. For example, taking that the horizontal direction is the fixed direction as an example, the first weight is w1=HFP/(HFP+HBP), and the second weight is w2=HBP/(HFP+HBP). The same applies to the vertical direction.

The porch requiring adjustment (evenly divided result) is allocated according to the first weight and the second weight, so that the adjustment of porch can be more uniform, which facilitates subsequent adjustment, and reduces the situation that certain porch cannot be adjusted subsequently.

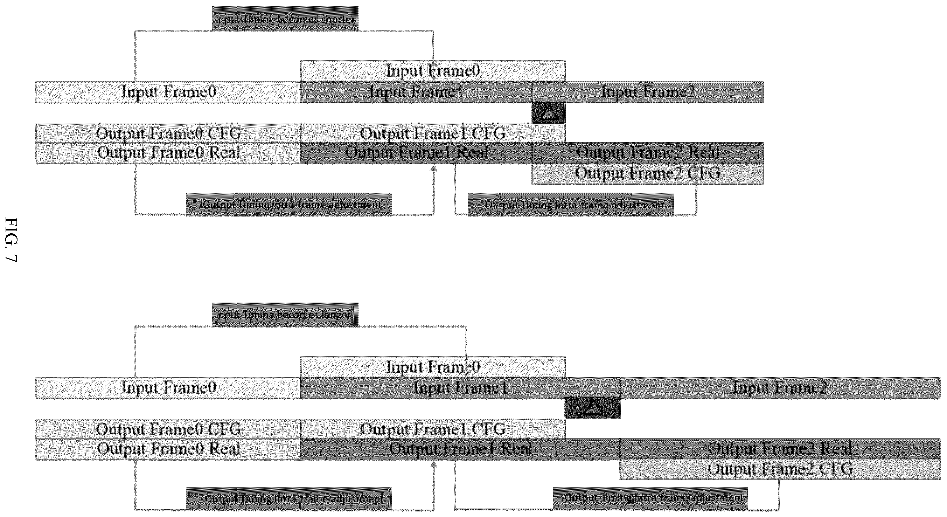

With reference to FIG. 7, FIG. 7 is a schematic diagram of intra-frame adjustment and inter-frame adjustment provided by an embodiment of the present invention. Frame0, Frame1, and Frame2 therein represent display timing standard streams of different frames, CFG represents configured fixed display timing standard stream, and Real represents display timing standard stream after adjustment by the method provided by embodiments of the present invention.

Under normal conditions, the total length of the input display timing standard stream and the output display timing standard stream is consistent. When the input display timing standard stream becomes longer or shorter, if the output display timing standard stream is not changed, and the original output display timing standard stream is still employed, it may cause discrepancy between output time of pixels and input time of the pixels, that is, the region with triangular region length may appear. However, in embodiments of the present invention, upon the intra-frame adjustment for the porch, the output display timing standard stream can have a consistent length with the input display timing standard stream, as shown by Input Frame1 and Output Frame1 Real. Moreover, corresponding inter-frame adjustment is performed on the output display timing standard stream of each subsequent frame, so as to enable the output display timing standard stream of each subsequent frame to be consistent with the input display timing standard stream in length.

By adjusting the porch of the output display timing standard stream of each subsequent frame in the fixed direction, the output display timing standard stream of each subsequent frame controls the pixel output based on the output display timing standard stream after the current frame adjustment, so as to achieve inter-frame regulation, without calculating and adjusting the output display timing standard stream of each subsequent frame one by one by the method provided by the preceding embodiments, thus reducing the adjustment frequency, and improving the stability of pixel output, thereby improving the quality of image output and display.

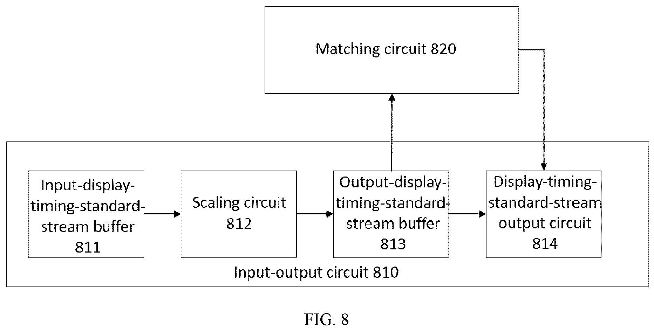

Based on the same inventive concept, embodiments of the present invention further provide an input-output matching-based display control circuit. With reference to FIG. 8, FIG. 8 is a schematic diagram of the input-output matching-based display control circuit provided by an embodiment of the present invention. The input-output matching-based display control circuit includes an input-output circuit 810 and a matching circuit 820.

The input-output circuit 810 is configured to provide an input display timing standard stream and an output display timing standard stream.

The matching circuit 820 is connected to the input-output circuit 810, and configured to implement, based on the input display timing standard stream and the output display timing standard stream provided by the input-output circuit, the input-output matching-based display method provided by any of the preceding embodiments.

In an embodiment, the matching circuit 820 is configured to acquire the input display timing standard stream and the output display timing standard stream, and determine whether the input display timing standard stream and the output display timing standard stream are matched; and adjust, if the input display timing standard stream and the output display timing standard stream are not matched, porch of the output display timing standard stream, so as to enable time of pixel output controlled by the output display timing standard stream to be matched with time of pixel input controlled by the input display timing standard stream, where the porch includes at least one of vertical front porch, vertical back porch, horizontal front porch, and horizontal back porch.

In an embodiment, the input-output circuit 810 includes an input-display-timing-standard-stream buffer 811, a scaling circuit 812, an output-display-timing-standard-stream buffer 813 and an output-timing-standard-stream output circuit 814 connected in sequence. The input-display-timing-standard-stream buffer 811 is configured to store an input-timing-standard-stream buffer. The scaling circuit 812 is configured to scale the timing-standard-stream buffer. The output-display-timing-standard-stream buffer 813 is configured to store an output-timing-standard-stream buffer. The output-timing-standard-stream output circuit 814 is configured to output the output timing standard stream stored in the output-display-timing-standard-stream buffer 813.

The matching circuit 820 is connected to both the output-display-timing-standard-stream buffer 813 and the output-timing-standard-stream output circuit 814. The display control circuit 820 can acquire and adjust the output display timing standard stream stored in the output-display-timing-standard-stream buffer 813, and the adjusted output display timing standard stream is output via the output-timing-standard-stream output circuit 814.

In the above, the output display timing standard stream is obtained by performing image scaling on the input display timing standard stream by a predefined image scaling factor, where the scaling ratio configured by the scaling circuit 812 is the predefined image scaling factor. The matching circuit 820 is further configured to determine a first total cycle quantity of the input display timing standard stream based on vertical parameters and horizontal parameters of the input display timing standard stream; determine a second total cycle quantity based on the image scaling factor, and vertical parameters and horizontal parameters of the output display timing standard stream; calculate, based on the first total cycle quantity and the second total cycle quantity, a cycle interval between the input display timing standard stream and the output display timing standard stream; and determine, based on the cycle interval and a predefined threshold, whether the input display timing standard stream and the output display timing standard stream are matched, where if the cycle interval exceeds the predefined threshold, it is determined that the input display timing standard stream and the output display timing standard stream are not matched.

In an embodiment, pixels obtained by the image scaling are temporarily stored in a buffer (or called as image line buffer) before output. The buffer is set with a watermark configured in advance, and when the number of rows of pixels temporarily stored in the buffer reaches the watermark, the buffer outputs the temporarily stored pixel rows, and ends the vertical back porch in the output display timing standard stream. The matching circuit 820 is further configured to be connected to the buffer for storing pixels, and the matching circuit 820 is configured to acquire the image scaling factor; and adjust the watermark based on the image scaling factor, so as to adjust the vertical back porch.

In an embodiment, the image scaling factor includes a vertical image scaling factor in a vertical direction, and the matching circuit 820 can be further configured to: adjust, if the vertical image scaling factor is reduced by X times the watermark to a first predefined value, where X is a positive integer; and adjust, if the vertical image scaling factor is enlarged by X times, the watermark to M, where when X is smaller than or equal to a second predefined value, M is equal to X, and when X is larger than the second predefined value, M is equal to the second predefined value; and the first predefined value is smaller than the second predefined value.

In an embodiment, the porch includes the horizontal front porch and the horizontal back porch. The matching circuit 820 further can be configured to: acquire a target data volume, the target data volume being a data volume of pixels stored in the buffer as controlled by the input display timing standard stream; calculate a target difference value between the target data volume and a predefined data volume, the predefined data volume characterizing a data volume of pixels output by the buffer as controlled by the output display timing standard stream; and adjust at least one of the horizontal front porch and the horizontal back porch based on the target difference value, so as to enable a duration required by the output display timing standard stream for outputting the target data volume by the buffer to be matched with a duration required by the output display timing standard stream for outputting the predefined data volume.

In an embodiment, the matching circuit 820 can be specifically configured to: decrease, if the target difference value characterizes that the target data volume is larger than the predefined data volume, at least one of the horizontal front porch and the horizontal back porch proportionally according to a ratio of the target difference value to the predefined data volume; and increase, if the target difference value characterizes that the target data volume is smaller than the predefined data volume, at least one of the horizontal front porch and the horizontal back porch proportionally according to the ratio of the target difference value to the predefined data volume.

In an embodiment, the porch includes the vertical front porch, and the matching circuit 820 can be configured to adjust the vertical front porch to end upon expiration of a predefined duration after the input display timing standard stream is ended, where the predefined duration after the input display timing standard stream is ended characterizes predefined time when the output display timing standard stream is ended.

In an embodiment, the matching circuit 820 can be configured to: upon expiration of the predefined duration after the input display timing standard stream is ended, if the output display timing standard stream does not end the vertical front porch, immediately end the vertical front porch, or after completion of output of the output display timing standard stream of current row, end the vertical front porch; and if the vertical front porch of the output display timing standard stream is ended after the input display timing standard stream is ended, and before the expiration of the predefined duration after the input display timing standard stream is ended, extend the vertical front porch to end upon expiration of the predefined duration after the input display timing standard stream is ended.

In an embodiment, the matching circuit 820 further can be configured to acquire the cycle interval; calculate, based on the adjusted porch, a total duration of the output display timing standard stream in a predefined non-fixed direction, the non-fixed direction being a horizontal or vertical direction; evenly divide the cycle interval based on the total duration in the non-fixed direction, so as to obtain an evenly divided result; and adjust, based on the evenly divided result, porch of the output display timing standard stream of each subsequent frame in a fixed direction, the fixed direction being the other one of the horizontal and vertical directions except the non-fixed direction.

In an embodiment, the porch in the fixed direction includes front porch and back porch, and the matching circuit 820 is specifically configured to allocate the evenly divided result to the front porch according to a first weight and allocate the evenly divided result to the back porch according to a second weight, where the first weight is a ratio of the front porch to the porch in the fixed direction; and the second weight is a ratio of the back porch to the porch in the fixed direction.

Based on the same inventive concept, embodiments of the present invention further provide a display device, which includes: a display panel and a display control unit.

In embodiments of the present invention, the display control unit includes the preceding input-output matching-based display control circuit, so as to control display of images on the display panel based on the input display timing standard stream and the output display timing standard stream provided by the input-output matching-based display control circuit.

Based on the same inventive concept, embodiments of the present invention further provide a readable storage medium, on which a program is stored, and when the program is executed by one or more processors, the processor is enabled to execute the method provided by the above embodiments.

The computer-readable storage medium may be any available medium that can be accessed by a computer or a data storage device, such as integrated server and data center including one or more available media. The available medium may be a magnetic medium (e.g., floppy disk, hard disk, magnetic tape), an optical medium (e.g., DVD (digital video disc)), or a semiconductor medium (e.g., SSD (Solid state Disk)), or the like.

The large language data management method, when implemented as a software functional module and sold or used as a stand-alone product, can be stored in a computer-readable storage medium. Based on such understanding, the technical solution of the present invention, the part that contributes to the prior art, or part of the technical solution can be embodied in form of a software product. The computer software product is stored in a storage medium, including a number of instructions to cause a computer device (which may be a personal computer, a server, a network device, or the like) to perform all or some of the steps of the method in various embodiments of the present invention. The aforementioned storage medium includes various media that can store program code, such as USB flash drives, mobile hard drives, ROM, RAM, diskettes or CD-ROMs.

The technical features in various embodiments in the above can be combined at will without conflict, and the embodiments obtained by the combination are covered within the scope of protection of the present invention.

The above-mentioned are merely for specific embodiments of the present invention, but the scope of protection of the present invention is not limited thereto. Any person skilled in the art could easily envisage changes or substitutions within the technical scope disclosed in the present invention, all of which should be encompassed within the scope of protection of the present invention. Therefore, the scope of protection of the present invention should be determined by the scope of protection of the claims.

It should be noted that the terms "comprise", "include" or any other variations herein are intended to encompass non-exclusive inclusion, so that a process, method, article or device that includes a series of elements not only includes those elements, but also includes other elements that are not explicitly listed, or elements that are inherent to such process, method, article or device. Without further limitations, an element specified by the wordings "comprising a..." does not exclude the presence of additional identical elements in the process, method, article or device that includes the specified element.

## Claims

1. An input-output matching-based display method, **characterized by** comprising steps of:
acquiring an input display timing standard stream and an output display timing standard stream;
determining whether the input display timing standard stream and the output display timing standard stream are matched; and
adjusting, when the input display timing standard stream and the output display timing standard stream are not matched, porch of the output display timing standard stream, so as to enable time of pixel output controlled by the output display timing standard stream to be matched with time of pixel input controlled by the input display timing standard stream.

2. The input-output matching-based display method according to claim 1, wherein the output display timing standard stream is obtained by performing image scaling on the input display timing standard stream by a predefined image scaling factor; and
the step of determining whether the input display timing standard stream and the output display timing standard stream are matched comprises:
determining a first total cycle quantity of the input display timing standard stream based on vertical parameters and horizontal parameters of the input display timing standard stream;
determining a second total cycle quantity based on the image scaling factor, and vertical parameters and horizontal parameters of the output display timing standard stream;
calculating, based on the first total cycle quantity and the second total cycle quantity, a cycle interval between the input display timing standard stream and the output display timing standard stream; and
determining, based on the cycle interval and a predefined threshold, whether the input display timing standard stream and the output display timing standard stream are matched, wherein when the cycle interval exceeds the predefined threshold, it is determined that the input display timing standard stream and the output display timing standard stream are not matched; and when the cycle interval is within the predefined threshold, it is determined that the input display timing standard stream and the output display timing standard stream are matched.

3. The input-output matching-based display method according to claim 2, wherein the porch comprises vertical back porch;
pixels obtained from the image scaling are temporarily stored in a buffer before output, wherein
the buffer is set with a watermark configured in advance, and when the number of rows of pixels temporarily stored in the buffer reaches the watermark, the buffer outputs the temporarily stored pixel rows, and ends the vertical back porch in the output display timing standard stream;
the step of adjusting porch of the output display timing standard stream comprises:
acquiring the image scaling factor; and
adjusting the watermark based on the image scaling factor, so as to adjust the vertical back porch.

4. The input-output matching-based display method according to claim 3, wherein the image scaling factor comprises a vertical image scaling factor in a vertical direction; and
the step of adjusting the watermark based on the image scaling factor comprises:
adjusting, when the vertical image scaling factor is 1/X, the watermark to a first predefined value, wherein X is a positive integer; and
adjusting, when the vertical image scaling factor is X, the watermark to M, wherein when the X is smaller than or equal to a second predefined value, the M is equal to the X, and when the X is larger than the second predefined value, the M is equal to the second predefined value; and the first predefined value is smaller than the second predefined value.

5. The input-output matching-based display method according to claim 2, wherein the porch comprises horizontal front porch and horizontal back porch; and
the step of adjusting porch of the output display timing standard stream comprises:
acquiring a target data volume, wherein the target data volume is a data volume of pixels stored in the buffer as controlled by the input display timing standard stream; and the pixels are temporarily stored in the buffer before output;
calculating a target difference value between the target data volume and a predefined data volume, wherein the predefined data volume characterizes a data volume of pixels output by the buffer as controlled by the output display timing standard stream; and
adjusting at least one of the horizontal front porch and the horizontal back porch based on the target difference value, so as to enable a duration required by the output display timing standard stream for outputting the target data volume by the buffer to be matched with a duration required by the output display timing standard stream for outputting the predefined data volume.

6. The input-output matching-based display method according to claim 5, wherein the step of adjusting at least one of the horizontal front porch and the horizontal back porch based on the target difference value comprises:
decreasing, when the target difference value characterizes that the target data volume is larger than the predefined data volume, at least one of the horizontal front porch and the horizontal back porch proportionally according to a ratio of the target difference value to the predefined data volume; and
increasing, when the target difference value characterizes that the target data volume is smaller than the predefined data volume, at least one of the horizontal front porch and the horizontal back porch proportionally according to the ratio of the target difference value to the predefined data volume.

7. The input-output matching-based display method according to claim 2, wherein the porch comprises vertical front porch, and the step of adjusting porch of the output display timing standard stream comprises:
adjusting the vertical front porch to end upon expiration of a predefined duration after the input display timing standard stream is ended, wherein the predefined duration after the input display timing standard stream is ended characterizes predefined time when the output display timing standard stream is ended.

8. The input-output matching-based display method according to claim 7, wherein the step of adjusting the vertical front porch to end upon expiration of a predefined duration after the input display timing standard stream is ended comprises:
upon expiration of the predefined duration after the input display timing standard stream is ended, when the output display timing standard stream does not end the vertical front porch, immediately ending the vertical front porch, or after completion of output of the output display timing standard stream of current row, ending the vertical front porch; and
when the vertical front porch of the output display timing standard stream is ended after the input display timing standard stream is ended, and before the expiration of the predefined duration after the input display timing standard stream is ended, extending the vertical front porch to end upon expiration of the predefined duration after the input display timing standard stream is ended.

9. The input-output matching-based display method according to claim 2, wherein after the step of adjusting porch of the output display timing standard stream, the method further comprises:
acquiring the cycle interval;
calculating, based on the adjusted porch, a total duration of the output display timing standard stream in a predefined non-fixed direction, wherein the non-fixed direction is a horizontal direction or a vertical direction;
evenly dividing the cycle interval based on the total duration in the non-fixed direction, so as to obtain an evenly divided result; and
adjusting, based on the evenly divided result, porch of the output display timing standard stream of each subsequent frame in a fixed direction, wherein the fixed direction is the other one of the horizontal direction and the vertical direction except the non-fixed direction.

10. The input-output matching-based display method according to claim 9, wherein the porch in the fixed direction comprises front porch and back porch, and the step of adjusting, based on the evenly divided result, porch of the output display timing standard stream of each subsequent frame in a fixed direction comprises:
allocating the evenly divided result to the front porch according to a first weight and allocating the evenly divided result to the back porch according to a second weight, wherein
the first weight is a ratio of the front porch to the porch in the fixed direction; and the second weight is a ratio of the back porch to the porch in the fixed direction.

11. An input-output matching-based display control circuit, **characterized by** comprising:
an input-output circuit; and
a matching circuit, connected to the input-output circuit, wherein
the matching circuit is configured to implement the input-output matching-based display method according to any one of claims 1-10 based on the input display timing standard stream and the output display timing standard stream provided by the input-output circuit.

12. A display device, **characterized by** comprising:
a display panel; and
a display control unit, comprising the input-output matching-based display control circuit according to claim 11, wherein the display control unit is configured to control display of an image on the display panel based on the input display timing standard stream and the output display timing standard stream provided by the input-output matching-based display control circuit.

13. A readable storage medium, **characterized in that** the readable storage medium stores a program, and when the program runs on a processor, the processor is enabled to execute the input-output matching-based display method according to any one of claims 1-10.
